# EUROPÄISCHE PATENTSCHRIFT

(11) **EP 1 209 394 B1**
(45) Veröffentlichungstag und Bekanntmachung des Hinweises auf die Patenterteilung: **15.03.2006**
(21) Anmeldenummer: 01127824.9
(22) Anmeldetag: 22.11.2001
(51) Int. Cl.: F16K 31/42

(54) **Elektrohydraulischer Stellantrieb**
Electro-hydraulic actuator
Vérin électro-hydraulique

(30) Priorität: 24.11.2000 DE 10058560
(43) Veröffentlichungstag der Anmeldung: 29.05.2002
(73) Patentinhaber: Voith Turbo GmbH & Co. KG, 89522 Heidenheim (DE)
(72) Erfinder: Strauss, Wilhelm, 74586 Frankenhardt (DE)
(74) Vertreter: Dr. Weitzel & Partner

(56) Entgegenhaltungen:
- DE-A- 2 118 974
- US-A- 3 757 646
- US-A- 4 589 444
- US-A- 5 117 868
- US-A- 5 467 683

## Beschreibung

Die Erfindung betrifft einen elektrohydraulischen Stellantrieb, insbesondere für die Verstellung eines Regelventils von Dampfturbinen.

Ein Stellantrieb dieser Art ist aus der Druckschrift US 3757646 bekannt.

Ein Stellantrieb für die Verstellung eines Dampfregelventiles besteht in der Regel aus einem einfach wirkenden Hydraulikzylinder mit Federrücksteltung. Der Hydraulikzylinder ist an seinem Kolbenstangenende mit dem Regelventil der Dampfturbine verbunden. Die Bewegung der Kolbenstange in Öffnungsrichtung des Regelventiles erfolgt mit Drucköl. In Schließrichtung des Regelventils wird die Kolbenstange mit einer mechanischen Feder bewegt. Durch diese Anordnung ist sichergestellt, daß bei Ausfall des Drucköles oder der elektrischen Hilfsenergie das Regelventil unabhängig von externer Hilfsenergie schließt und die Dampfzufuhr zur Turbine unterbrochen wird. Ein unkontrollierter Betriebszustand der Turbine bei Ausfall des Drucköles oder der elektrischen Hilfsenergie ist damit nicht möglich.

Der Öldruck im Arbeitsraum des Zylinders, der im Zusammenwirken mit der Federkraft der Druckfeder die Bewegung der Kolbenstange und damit die Bewegung des Regelventiles bewirkt, wird mit einem Schieberventil verändert. Bei einer Bewegung in Öffnungsrichtung wird mit dem Schieberventil Drucköl in den Arbeitsraum des Zylinders eingespeist. Bei einer Bewegung in Schließrichtung wird mit dem Schieberventil der Druck des Drucköles im Arbeitsraum des Zylinders reduziert.

Das Schieberventil wird insbesondere in Abhängigkeit der vorhandenen Betriebszustände der Dampfturbine von einer externen Regeleinrichtung hydraulisch, elektrohydraulisch oder elektromagnetisch bewegt. Zur Stabilisierung der Bewegung der Kolbenstange wird in der Regel die Position der Kolbenstange des Zylinders mechanisch oder elektrisch erfaßt und auf das Schieberventil wirkend zurückgeführt.

Bestimmte Betriebszustände der Turbine, die einen Schnellschluß oder einen schnellen Lastwechsel in den Teillastbetrieb erfordern, wie z. B. Lastabwurf, Drehzahlschutz, Ventilationsschutz, Verhältnisdruck- oder Druckschutz, setzen eine Schließgeschwindigkeit des Dampfregelventiles voraus, die wesentlich größer ist als die notwendige Bewegungsgeschwindigkeit bei normalem Regelbetrieb. Diese Schließgeschwindigkeit muß durch eine entsprechend große Bewegungsgeschwindigkeit der Kolbenstange des Hydraulikzylinders in Schließrichtung bewirkt werden. Dafür muß der Arbeitsraum des Hydraulikzylinders in sehr kurzer Zeit entleert werden, und es sind deutlich größere Querschnitte in der Ölführung des Zylinders und im Schieberventil notwendig, als sie für den Normalregelbetrieb der Turbine benötigt werden.

Die realisierbare Baugröße des Schieberventils wird jedoch durch Faktoren wie Masse des Schiebers, Kraft des Schieberstellantriebes und andere hemmende Kräfte begrenzt. Häufig sind daher zur Realisierung der Schließgeschwindigkeit weitere elektrisch betätigbare Schaltventile in extern angeordneten Funktionsgruppen erforderlich. Der Anschluß des Schieberventiles an den Hydraulikzylinder bzw. der Anschluß der extern angeordneten Schaltventile erfordert für die hohen Schaltgeschwindigkeiten Ölleitungen mit großem Querschnitt. Diese Ölleitungen bergen die Gefahr von Ölverlust, von Umgebungsverschmutzung und Brandgefahr bei Leitungsbeschädigung oder Leitungsbrüchen. Zudem ist die exakte Positionierung der Kolbenstange des Hydraulikzylinders aufgrund des großen Ölvolumens eingeschränkt. Ein Anpassen der Leitungsquerschnitte ist für jeden Einsatz entsprechend der erforderlichen Schließgeschwindigkeit notwendig, was zu hohen Herstellungskosten führt. Zusätzliche extern angeordnete Hydraulikzylinder benötigen im allgemeinen jeweils wiederum Wegsensoren für die Positionsregelung der Kolben und entsprechende Regler für die Positionsregelung. Der schaltungstechnische Aufwand ist dementsprechend hoch und störanfällig.

Der Erfindung liegt die Aufgabe zugrunde, einen elektrohydraulischen Stellantrieb und ein Verfahren zum Steuem eines elektrohydraulischen Stellantriebes darzustellen, mit dem die genannten Nachteile des Standes der Technik vermieden werden. Insbesondere soll sich der erfindungsgemäße elektrohydraulische Stellantrieb durch eine geringe Anzahl notwendiger Funktionsteile auszeichnen, einen kompakten Aufbau haben und kostengünstig herstellbar sein. Die Betriebssicherheit und Zuverlässigkeit soll gegenüber dem Stand der Technik erhöht sein, und ein genaues Ausregeln insbesondere eines Regelventils von Dampfturbinen soll mit dem erfindungsgemäßen elektrohydraulischen Stellantrieb möglich sein.

Diese Aufgabe wird durch einen elektrohydraulischen Stellantrieb gemäß Anspruch 1 und ein Verfahren gemäß Anspruch 14 gelöst. Die Unteransprüche beschreiben besonders vorteilhafte Ausführungen.

Der erfindungsgemäße elektrohydraulische Stellantrieb umfaßt eine Kolbeneinheit, ein Schaltventil, ein Schieberventil und einen Schieberstellantrieb. Diese verschiedenen Baugruppen sind als Funktionseinheit ausgeführt, welcher eine einzige Baueinheit ausbildet. Somit können sie in einem gemeinsamen Gehäuse untergebracht werden bzw. derart zusammengefügt werden, daß sie ein gemeinsames Gehäuse ausbilden. Die Kolbeneinheit umfaßt mindestens einen verschiebbaren Kolben, der den Raum der Kolbeneinheit in einen Arbeitsraum und einen Federraum unterteilt. An dem Kolben ist eine Kolbenstange angeschlossen. Der Kolben ist in eine Richtung, die der Schließrichtung des mittels des erfindungsgemäßen Stellantriebes zu verstellenden Ventiles entspricht, durch ein druckelastisches Element in dem Federraum belastet In die entgegengesetzte Richtung, die Öffnungsrichtung des mittels des erfindungsgemäßen Stellantriebes zu verstellenden Ventiles, ist der Kolben durch einen hydrostatischen Druck, der in dem Arbeitsraum aufgebaut wird, belastet Mit der Bewegung des Kolbens wird selbstverständlich auch die Kolbenstange verschoben.

Das Schieberventil des erfindungsgemäßen Stellantriebes umfaßt mindestens einen Speisungsanschluß zum Zuführen eines druckführenden Mediums und mindestens einen Druckanschluß zum Ableiten des druckführenden Mediums in den Arbeitsraum der Kolbeneinheit Das Schieberventil umfaßt weiterhin einen Steuerdruckanschluß für einen Steuerdruck. Der Speisungsanschluß ist mit dem Druckanschluß und dem Steuerdruckanschluß mittels druckleitender Verbindungen verschaltet.

Das Schieberventil umfaßt mindestens einen Schieber, der mittels des Stellantriebes verschiebbar im Schieberventil gelagert ist und Steuerkanten aufweist, die den Querschnitt der druckleitenden Verbindungen zwischen den Anschlüssen des Schieberventils in Abhängigkeit der Schieberposition im Schieberventil bestimmen. Somit bestimmt die Schieberposition zusammen mit dem Druck am Speisungsanschluß das sich einstellende Druckniveau in den anderen Anschlüssen des Schieberventils.

Der Arbeitsraum der Kolbeneinheit ist mittels einer druckleitenden Verbindung am Druckanschluß des Schieberventils angeschlossen. Der Druck im Arbeitsraum der Kolbeneinheit wird also durch den Druck am Speisungsanschluß und die Position des Schiebers im Schieberventil bestimmt. Durch die Positionierung des Schiebers im Schieberventil wird somit indirekt auch die Position des Kolbens in der Kolbeneinheit geregelt. Der elektrohydraulische Stellantrieb kann somit insbesondere mit einem einzigen Positionssensor und einem einzigen Stellantrieb ausgeführt werden. Der Arbeitsraum und der Federraum der Kolbeneinheit sind erfindungsgemäß mittels einer Schnellentladungsverbindung verschaltet, in welche ein Schaltventil derart geschaltet ist, daß es die Schnellentladungsverbindung in Abhängigkeit des Steuerdrucks öffnet oder schließt. Das Schaltventil ist dabei mit dem Steuerdruck derart beaufschlagt, daß es bei bzw. oberhalb eines ersten vorgegebenen Druckniveaus schließt und unterhalb eines zweiten vorgegebenen Druckniveaus des Steuerdruckes öffnet, wobei das zweite Niveau kleiner als oder gleich dem ersten Niveau ist Besonders vorteilhaft ist das Schaltventil in Schließrichtung mit dem Steuerdruck beaufschlagt und in Öffnungsrichtung mit einem Druck, der im wesentlichen dem Druck im Arbeitsraum der Kolbeneinheit entspricht. Fällt der Steuerdruck dann unter einen vorgegebenen Grenzwert ab, so öffnet das Schaltventil. Die Schnellentladungsverbindung ist besonders vorteilhaft strömungsgünstig angeordnet, z. B. dadurch, daß sie den Arbeitsraum und den Federraum möglichst direkt verbinden, d. h. die Länge der Schnellentladungsverbindung ist kurzgehalten und es sind wenig Elemente, die Strömungsverluste bewirken - z. B. Querschnittsveränderungen oder Umlenkungen-, eingebracht.

Besonders vorteilhaft umfaßt das Schieberventil mindestens einen weiteren, zweiten Druckanschluß. Der zweite Druckanschluß ist mittels einer druckleitenden Verbindung mit dem ersten Druckanschluß verschaltet, und die Steuerkanten des Schiebers bestimmen in Abhängigkeit der Position des Schiebers den Querschnitt dieser druckleitenden Verbindung. Der Schnellentladungsverbindung ist besonders vorteilhaft eine zweite druckleitende Verbindung zwischen Arbeitsraum und Federraum parallel geschaltet, wobei diese zweite druckleitende Verbindung mittels den beiden Druckanschlüssen am Schieberventil derart verschaltet ist, daß die Steuerkanten des Schiebers den Querschnitt der zweiten, parallelen druckleitenden Verbindung bestimmen.

Dadurch sind zwei Betriebsarten des elektrohydraulischen Stellantriebs möglich:
Zum einen ist eine schnelle Bewegung des Kolbens und damit der Kolbenstange der Kolbeneinheit in Schließrichtung durch Öffnen des Schaltventils möglich. Das Schaltventil gibt. die größere druckleitende Verbindung (Schnellentladungsverbindung, z. B. mit einem Querschnitt zwischen 2000 mm² und 9000 mm², wobei diese Größe jedoch insbesondere abhängig ist von der Baugröße des gesamten elektrohydraulischen Stellantriebes) zwischen Arbeitsraum und Federraum frei und bewirkt so einen schnellen Druckabbau im Arbeitsraum, was zu einem schnellen Bewegen des Kolbens in SchlieBrichtung aufgrund der Kraft des druckelastischen Elements im Federraum führt Somit ist die erforderliche Stellgeschwindigkeit des elektrohydraulischen Stellantriebes unabhängig von Einspeisedruck oder Hilfsenergie, z B. für den Schnellschluß eines Regelventiles von Dampfturbinen, gewährleistet

Die zweite Betriebsart ermöglicht ein sehr exaktes Einstellen der Position des Stellantriebes, d.h. des Kolbens bzw. der Kolbenstange der Kolbeneinheit. In dieser zweiten Betriebsart erfolgt die Druckeinstellung im Arbeitsraum mittels des Schiebenrentiles. Die Position des Schiebers bestimmt mittels der Steuerkanten die Druckreduzierung zwischen Speisungsanschluß und Arbeitsraum. Besonders vorteilhaft bestimmt die Position des Schiebers weiterhin die Reduzierung des Druckes vom Arbeitsraum zum Federraum. Somit ist durch Verschiebung des Schiebers im Schieberventil eine kontinuierliche Veränderung des Ölstromes vom Speisungsanschluß zum Arbeitsraum bzw. vom Arbeitsraum zum Federraum und damit eine geregelte Positionsveränderung der Kolbenstange bzw. des Kolbens der Kolbeneinheit möglich. Der Querschnitt der druckleitenden Verbindungen, der mittels des Schiebers reduziert werden kann, beträgt vorteilhaft zwischen 300 mm² und 500 mm² (auch diese Größe ist abhängig von der Baugröße des gesamten elektrohydraulischen Stellventiles bzw. von der Baureihengröße).

Nachfolgend soll die Erfindung anhand von Ausführungsbeispielen und den beigefügten Figuren näher beschrieben und die Funktionsweise deutlich gemacht werden.

Es zeigen:
- Figur 1: zeigt ein Ausführungsbeispiel des erfindungsgemäßen elektrohydraulischen Stellantriebes in einer schematischen Darstellung;
- Figur 2: eine teilgeschnittene Ansicht eines erfindungsgemäß ausgebildeten elektrohydraulischen Stellantriebes mit einem zylindrischen Grundkörper;
- Figur 3: eine vergrößerte Ansicht eines Teilbereiches des in Fig. 2 dargestellten elektrohydraulischen Stellantriebes.

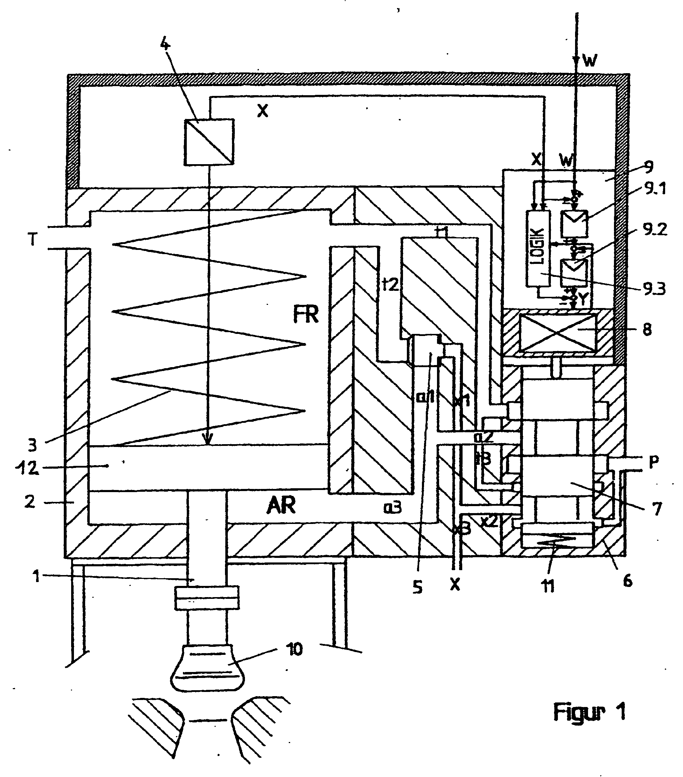

In Figur 1 erkennt man eine Kolbeneinheit 2, ein Schaltventil 5, ein Schieberventil 6 und einen Schieberstellantrieb 8, deren Gehäuse in einer kompakten Funktionseinheit zusammengebaut sind. Besonders vorteilhaft könnten auch alle Baugruppen in einem Gehäuse zusammengefaßt sein. Der Kolben 12 der Kolbeneinheit 2 unterteilt den Raum der Kolbeneinheit in einen Federraum FR und einen Arbeitsraum AR. In den Federraum FR ist eine Druckfeder 3 geschaltet, die den Kolben in Schließrichtung belastet. In Öffnungsrichtung wird der Kolben durch einen hydrostatischen Druck im Arbeitsraum AR belastet.

Die Position des Kolbens 12 und damit der Kolbenstange 1 wird mittels des Positionssensors 4 ermittelt. Der Positionssensor 4 kann besonders vorteilhaft in den Zylinder eingebaut und als elektrischer Positionssensor ausgeführt sein.

Das Schieberventil 6 umfaßt einen Schieber 7 mit Steuerkanten, der verschiebbar im Schieberventil 6 gelagert ist. Die Kraft zum Verschieben des Schiebers 7 wird auf der einen Seite mittels einer Druckfeder 11 und auf der anderen Seite mittels des Stellantriebes 8, der als Elektromagnet ausgebildet ist, aufgebracht. Die Magnetkraft des Elektromagneten wird mittels einer Regelelektronik 9 geregelt. Die Regelelektronik 9 umfaßt in diesem Ausführungsbeispiel einen Positionsregelkreis 9.1 für die Kolbenstange, einen Kraftregler für den Elektromagneten (Regler 9.2) und eine intelligente Logik 9.3.

Das Schieberventil 6 umfaßt einen Speisungsanschluß P zum Zuführen eines druckführenden Mediums, z. B. Hydrauliköl, die Druckanschlüsse A₂, T₁, T₃ und einen Steuerdruckanschluß X₂ für einen Steuerdruck. Die Anschlüsse des Schieberventils 6 sind druckleitend miteinander verbunden, wobei der Querschnitt der druckleitenden Verbindungen mittels der Steuerkanten des Schiebers 7 positionsabhängig vom Schieber 7 eingestellt wird.

Der Arbeitsraum AR und der Federraum FR der Kolbeneinheit 2 sind mittels einer Schnellentladungsverbindung a₃, a₁, t₂, in die das Schaltventil 5 geschaltet ist, druckfeitend verbunden. Dei Schnellentladungsverbindung ist besonders strömungsgünstig angeordnet Das Schaltventil 5 ist derart ausgebildet, daß es den Querschnitt der Schnellentladungsverbindung a₃, a₁, t₂ öffnet oder schließt, in Abhängigkeit des Steuerdruckes in dem Kanal x₁ der Steuerdruckleitung. Der Schnellentladungsverbindung a₃, a₁, t₂ ist eine zweite druckleitende Verbindung a₃, a₂, t₃, t₁ parallel geschaltet, deren Querschnitt durch die Position des Schiebers 7 im Schieberventil 6 bestimmt wird.

Der elektrohydraulische Stellantrieb kann mittels der Kolbenstange 1 insbesondere mit einem Regelventil 10, z. B. einem Regelventil von Dampfturbinen, gekuppelt werden.

Die Ansteuerung des elektrohydraulischen Stellantriebes erfolgt mit einem elektrischen Signal als Positionssollwert w. Dieser Sollwert w wird im Positionsregelkreis 9.1 der Regelelektronik 9 mit der vom elektrischen Positionssensor 4 gemessenen Istposition x der Kolbenstange 1 bzw. des Kolbens 12 verglichen und bewirkt mit dem Regler 9.2 eine Veränderung der Kraft des Elektromagneten des Schieberstellantriebes 8. Diese Magnetkraft verschiebt im Zusammenwirken mit der Feder 11 den Schieber 7 des Schieberventiles 6 und bewirkt damit eine kontinuierliche Veränderung des Ölstromes vom Speisungsanschluß P über die Kanäle a₂ und a₃ zum Arbeitsraum AR der Zylindereinheit 2 bzw. vom Arbeitsraum AR über die Kanäle a₃, a₂, t₃, t₁ in den Federraum FR und zum abführenden Anschluß T des Federraumes.

Die aus diesem veränderlichen Ölstrom resultierende Hydraulikkraft bewirkt im Zusammenwirken mit der Druckfeder 3 eine geregelte Positionsveränderung der Kolbenstange 1 des elektrohydraulischen Stellantriebes.

Wird die notwendige Schließgeschwindigkeit des elektrohydraulischen Stellantriebes mit diesem kontinuierlichen Ölstrom nicht erreicht, dann wird, ausgelöst durch die in der Elektronik 9 integrierte, intelligente Logik 9.3, die Magnetkraft des Elektromagneten begrenzt, und der Schieber des Schieberventils 6 wird durch die Feder 11 in seine Schaltposition geschoben. In dieser Schaltposition wird das hydraulisch geschlossene Schaltventil 5 über die Kanäle x₁, x₂, t₃ und t₁ geöffnet. Das geöffnete Schaltventil 5 vergrößert den Querschnitt des Ölstromes für den schnellen Rückhub der Kolbenstange 1 überproportional. Die Arbeitsfeder 3 drückt den Kolben 12 in Schließrichtung des Regelventiles 10, verkleinert den Arbeitsraum AR und das Hydrauliköl fließt durch die Kanäle a₃, a₁ und t₂ durch das Schaltventil in den nun vergrößerten Federraum FR. Der Federraum FR wirkt dabei als Pufferspeicher für das umströmende Öl.

Die Bewegung der Kolbenstange 1 in Öffnungsrichtung ist nur möglich, wenn das Schaltventil 5 geschlossen ist. Das Schließen erfolgt dadurch, daß die Magnetkraftbegrenzung des Elektromagneten aufgehoben und der Schieber 7 des Schieberventils 6 mit der Magnetkraft des Elektromagneten im Zusammenwirken mit der Feder 11 in seine Regelposition geschoben wird und den Speisungsanschluß P über die Kanäle x₂ und x₁ mit dem Schaltventil 5 verbindet.

Durch die Anordnung des Schaltventiles 5, des Schieberventiles 6 und der Feder 3 ist sichergestellt, daß sich bei Ausfall des Drucköls oder bei Ausfall der elektrischen Hilfsenergie oder durch Öffnen des Anschlusses X mit einem externen Ventil der Kolben 12 mit der Kolbenstange 1 mit maximaler Schließgeschwindigkeit in die Geschlossen-Position bewegt und das Regelventil - unabhängig von externer Hilfsenergie - schließt Dadurch wird insbesondere bei Regelung eines Regelventiles für Dampfturbinen mittels des elektrohydraulischen Stellantriebes die Dampfzufuhr zur Turbine unterbrochen. Ein unkontrollierter Betriebszustand der Turbine ist damit nicht möglich.

Der erfindungsgemäße elektrohydraulische Stellantrieb ist als kompakte Funktionseinheit aufgebaut. Durch die Reduzierung der Anzahl der notwendigen Funktionsteile, insbesondere durch die Kombination der Regel- und Schaltfunktion in der Elektromagneten-Schieberventilanordnung und dadurch, daß zusätzliche, extern angeordnete Funktionsgruppen nicht erforderlich sind, ergibt sich eine deutliche Erhöhung der Zuverlässigkeit und der Betriebssicherheit gegenüber den bekannten Ausführungen.

Besonders vorteilhaft sind alle elektrischen Baugruppen, wie Positionssensor und Regelelektronik innerhalb des vorzugsweise metallischen Gehäuses des elektrohydraulischen Stellantriebes angeordnet und somit zuverlässig gegen Umwelteinflüsse und elektromagnetische Störeinwirkungen geschützt. Weiterhin ist die elektromagnetische Verträglichkeit verbessert.

Da keine externen Ölleitungen mit großem Querschnitt erforderlich sind, ist die Gefahr von Ölverlust, von Umweltverschmutzung und die Brandgefahr reduziert. Zudem ist die Gefahr von Leitungsbrüchen minimiert.

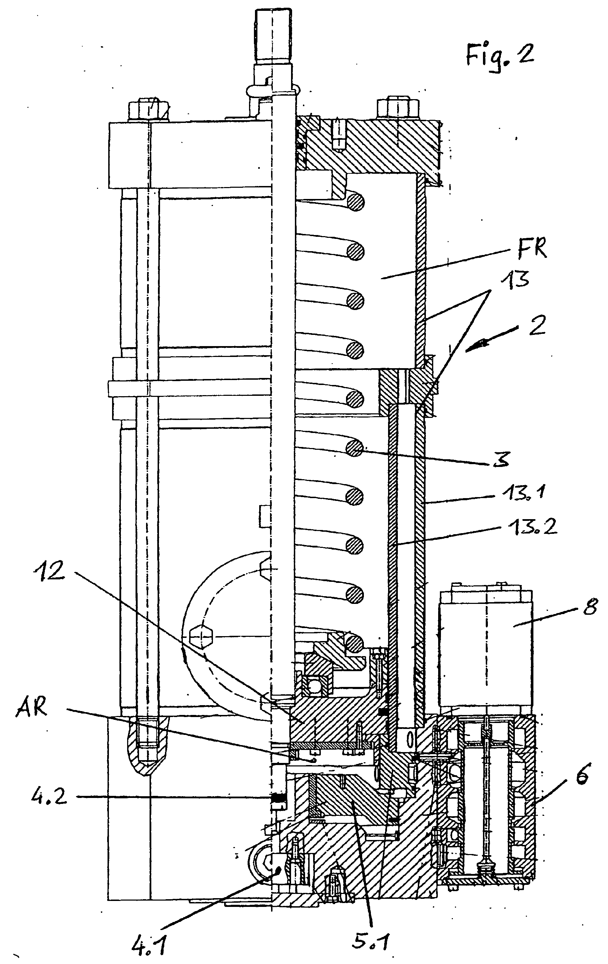

In Figur 2 ist eine weitere vorteilhafte Ausführung eines erfindungsgemäßen elektrohydraulischen Stellantriebes dargestellt. Die Kolbeneinheit 2 dieser Ausführung weist einen im wesentlichen zylinderförmigen Grundkörper 13 auf, der über einen Abschnitt seiner Längsachse doppelwandig mit der Außenwand 13.1 und der Innenwand 13.2 ausgeführt ist. In dem zylinderförmigen Grundkörper 13 gleitet der Kolben 12, welcher von einer Druckfeder 3 in einem Federraum FR belastet ist. Im entgegengesetzten Arbeitsraum AR ist der Kolben durch einen hydrostatischen Druck belastet, wie nachfolgend noch näher beschrieben werden wird.

Das Schaltventil ist strömungsgünstig als Plattenventil mit einer Ventilplatte 5.1 ausgeführt, die im Zylinderboden axial unterhalb des Kolbens 12 angeordnet ist. Die Ventilplatte 5.1 dichtet dabei im geschlossenen Zustand den Arbeitsraum AR nach unten ab. Die Verbindungsleitung zwischen Plattenventil und Federraum FR wird durch den doppelwandigen Aufbau des Zylinders aus einfachen Normrohren gebildet Damit entfällt eine aufwendige Leitungsführung mit großen Querschnitten zwischen dem Plattenventil und dem Puffervolumen. Zusätzlich ergibt sich dadurch noch der Vorteil, daß im Falle einer defekten Dichtung zum druckbeaufschlagten Arbeitsvolumen kein Öl nach außen in die Umgebung austreten kann. Die gezeigte Ausführung ist somit besonders kostengünstig und betriebssicher.

Der Positionssensor ist in diesem Ausführungsbeispiel in Form einer Wegemeßeinrichtung 4.1, die fest in das Gehäuse des Stellantriebes eingebaut ist und in eine Bohrung des Kolbens 12 hineinragt, und aus einem am Kolben befestigten Sensorring 4.2 aufgebaut. Die Wegemessung erfolgt berührungslos. Durch diese Anordnung kann vorteilhaft die Anzahl der mechanischen Durchdringungen des Gehäuses des Stellantriebes auf Eins minimiert werden, nämlich auf alleinig die Durchdringung durch die Kolbenstange, weiche das Regelventil betätigt Eine üblicherweise sonst vorgesehene zweite Durchdringung entgegengesetzt der ersten Durchdringung entfällt und damit eine meist aufwendige bewegliche Abdichtung des Puffervolumens mit all den bekannten Problemen wie Verschleiß, Leckage und Reibungserscheinungen, wie z. B. stick-slip. Die Abdichtung an dieser Stelle erfolgt vorteilhaft bei der erfindungsgemäßen Ausführung durch einen einfach statisch dichtenden O-Ring.

In der dargestellten Ausführung sind seitlich am zylinderförmigen Grundkörper 13 das Schieberventil 6 und oberhalb desselben der Schieberstellantrieb 8 angeordnet. Der Schieberstellantrieb 8 umfaßt dabei vorteilhaft einen Regelmagneten mit Positionsregler für die Positionsregelung der Kolbenstange.

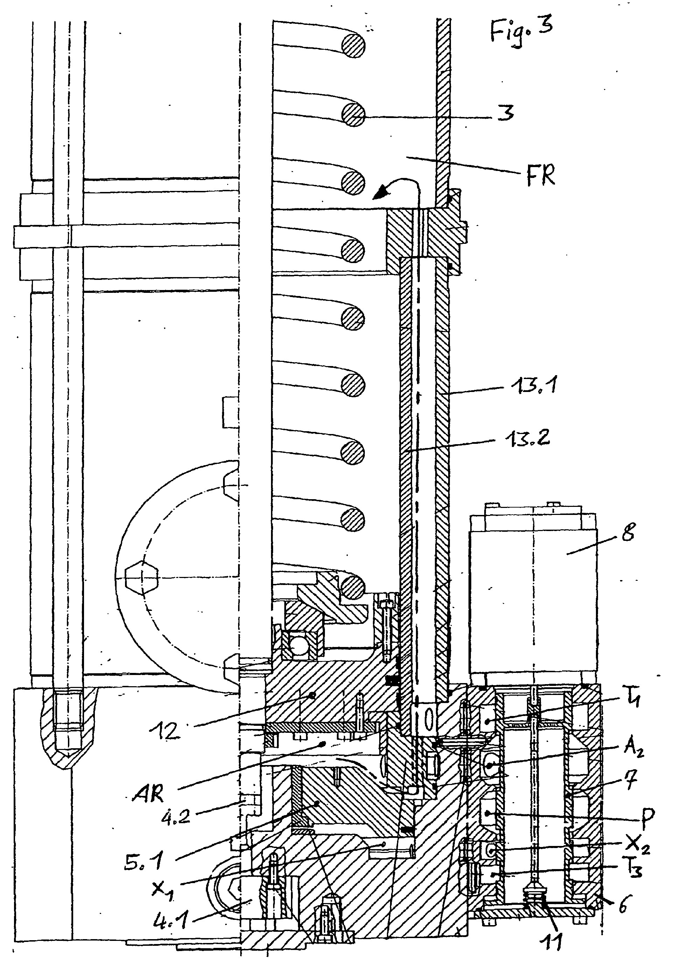

In Fig. 3 ist noch einmal der untere Bereich des in Fig. 2 dargestellten elektrohydraulischen Stellantriebes in vergrößerter Darstellung gezeigt. Man erkennt hier insbesondere den Schieber 7 des Schieberventiles 6 und die Druckanschlüsse T₁, A₂, T₃ sowie den Speisungsanschluß P und den Steuerdruckanschluß X₂. Der Druckanschluß A₂ ist über nicht dargestellte Verbindungen mit dem Arbeitsraum AR verbunden, so daß der Kolben 12 mit zunehmendem Arbeitsraumdruck axial nach oben entgegen der Federkraft der Druckfeder 3 bewegt wird. Der Steuerdruckanschluß X₂ ist über nicht dargestellte Verbindungen mit dem Raum auf der Unterseite der Ventilplatte 5.1 strömungsleitend verbunden, wobei hier nur der Endabschnitt des Kanales x₁ der Steuerdruckleitung bezeichnet ist. Somit wird die Ventilplatte 5.1 auf der einen Seite durch den Druck im Arbeitsraum AR beaufschtag und auf der entgegengesetzten Seite durch den Steuerdruck. Bei Absinken des Steuerdruckes unter den Arbeitsraumdruck bewegt sich die Ventilplatte 5.1 axial im zylindrischen Grundkörper 13 nach unten, so daß das Schaltventil öffnet Dadurch wird die Schnellentladungsverbindung vom Arbeitsraum AR in den Federraum FR freigegeben, und das Arbeitsmedium strömt entlang des durch die gestrichelte Linie angedeuteten Strömungsweges.

Wie man sieht, ist somit das Schaltventil als Plattenventil 5.1 ohne Schließfeder ausgeführt. Die Dichtkraft des Plattenventiles im "Geschlossen-Zustand" wird durch den hydraulischen Systemdruck erzeugt Dimensionierungsbedingt ist diese Dichtkraft größer als die öffnende Kraft des Antriebsvolumens. Erst bei Absinken dieses Druckes unter einen vorgegebenen Grenzwert öffnet das Plattenventil. Da somit auf eine Druckfeder verzichtet werden kann, ist diese vorteilhafte Ausführung kostengünstiger und besonders betriebssicher, da Druckfedern im allgemeinen einer Bruchgefahr unterliegen.

Durch die erfindungsgemäße Ausgestaltung kann eine besonders große Betriebssicherheit und Zuverlässigkeit erreicht werden. Dies gilt insbesondere für die gezeigten Ausgestaltungen mit einem Regelmagneten mit Kraftregelung und einem einzigen Positionssensor für das gesamte System. Bisher waren üblicherweise zusätzliche Wegsensoren für die unterlagerte Positionsregelung eines üblicherweise extern angeordneten Proportional-Wegeventils erforderlich. Durch die konstruktive Anordnung des Plattenventiles im Antrieb und den robusten Aufbau des Plattenventiles ohne Feder kann eine besonders große Zuverlässigkeit erreicht werden.

Die gezeigten Ausführungen sind frei von geschweißten druckführenden Bauteilen, welche grundsätzlich immer besonders geprüft werden müssen. Die Herstellung des gezeigten elektrohydraulischen Stellantriebes ist somit kostengünstiger.

Zur geregelten Verstellung des Kolbens im Hauptzylinder wird bei den gezeigten Ausführungen ein Schieberventil mit Regelmagnet mit integriertem Positionsregler für die Position des Kolbens verwendet. Damit ergeben sich folgende Vorteile:
* es ist nur ein Betätigungsmagnet notwendig, die Kraft und der Stellweg des Regelmagneten reichen aus, um die notwendigen Querschnitte des Schieberventiles zu verändern;
* weitere Betätigungsmagneten oder Leistungsverstärker entfallen; damit ist die Ausführung besonders kostengünstig und betriebssicher.

Das Schieberventil ist insbesondere ohne Lageregelung des Ventilkolbens ausgeführt. Die im Regelmagneten vorhandene Kraftregelung für den Magneten ist für die benötigte Dynamik des Schiebers ausreichend. Somit ist ein Sensor für die Positionserfassung des Schieberkolbens und ein Regler für die Positionsregelung desselben verzichtbar. Auch dies trägt zu einer kostengünstigen und besonders betriebssicheren Ausführung bei.

Durch die vorteilhafte Positionsregelung des Kolbens mit einem im Regelmagneten integrierten Regler direkt am Stellantrieb wird eine klare einfache Schnittstelle zur übergeordneten Leittechnik geschaffen, was den Aufwand bei der externen Verkabelung reduziert. Zusätzlich ergibt sich der Vorteil, daß der elektrohydraulische Stellantrieb ohne übergeordnete Leittechnik funktionsfähig und damit beim Hersteller prüfbar ist.

Bei Ausführung des Regelmagneten mit einer besonders großen Magnetkraft wird die Verwendung einer starken Rückstellfeder für den Ventilkolben/Schieber des Schieberventiles ermöglicht. Der konstruktive Aufbau des gezeigten Schieberventiles und des Plattenventiles, sowie der Einsatz einer besonders starken Rückstellfeder verhindert ein Verklemmen des Ventilkolbens. Der Stellantrieb kann durch Abschalten der elektrischen Versorgungsspannung in die "Geschlossen-Position" gebracht werden.

Bei der gezeigten Ausführung kann für die Funktionsprüfung des Stellantriebes der Schieber/Ventilkolben des Schieberventiles mit einer nicht dargestellten Handbetätigung ohne elektrische Hilfsenergie bewegt werden.

Durch Veränderung der Elektronik des Regelmagneten ist besonders leicht eine Veränderung der Funktion möglich. Da auf komplizierte Durchbrüche bzw. Verbindungsleitungen verzichtet wurde, ist keine aufwendige mechanische Bearbeitung notwendig, und ein Verklemmen oder Verschmutzen ist nicht möglich.

### Bezugszeichenliste

- 1: Kolbenstange
- 2: Kolbeneinheit
- 3: Druckfeder
- 4: Positionssensor
- 4.1: Wegmeßeinrichtung
- 4.2: Sensorring
- 5: Schaltventil
- 5.1: Ventilplatte
- 6: Schieberventil
- 7: Schieber
- 8: Schieberstellantrieb
- 9: Regelelektronik
- 9. 1: Positionsregelkreis
- 9.2: Regler
- 9.3: Intelligente Logik
- 10: Regelventil
- 11: Druckfeder
- 12: Kolben
- 13: Grundkörper
- 13.1: Äußere Wand
- 13.2: Innere Wand
- AR: Arbeitsraum
- FR: Federraum
- A₂, T₁, T₃: Druckanschluß
- X₂: Steuerdruckanschluß
- T: Abführender Anschluß
- P: Speisungsanschluß
- X: Anschluß für externes Ventil
- a₁, a₂, a₃, t₁, t₂, t₃: Kanäle
- x₁, x₂, X₃: Kanäle der Steuerdruckleitung

## Patentansprüche

1. Elektrohydraulischer Stellantrieb, insbesondere für die Verstellung eines Regelventils von Dampfturbinen;
1.1 mit einer eine einzige Baueinheit ausbildende Funktionseinheit, umfassend eine Kolbeneinheit (2), ein Schaltventil (5), ein Schieberventil (6) und einen Schieberstellantrieb (8);
1.2 die Kolbeneinheit (2) umfaßt mindestens einen in der Kolbeneinheit (2) verschiebbaren Kolben (12), der den Raum in der Kolbeneinheit (2) in einen Arbeitsraum (AR) und einen Federraum (FR) unterteilt, und eine an dem Kolben (12) angeschlossene Kolbenstange (1);
1.3 der Kolben (12) ist in eine Richtung - Schließrichtung - durch ein druckelastisches Element in dem Federraum (FR) und in die entgegengesetzte Richtung - Öffnungsrichtung - durch einen hydrostatischen Druck in dem Arbeitsraum (AR) belastet;
1.4 das Schieberventil (6) umfaßt mindestens einen Speisungsanschluß (P) zum Zuführen eines druckführenden Mediums, mindestens einen Druckanschluß (T₁, T₃, A₂) zum Ableiten und/oder Umleiten des druckführenden Mediums und einen Steuerdruckanschluß (X₂) für einen Steuerdruck;
1.5 der Speisungsanschluß (P) ist mit dem Druckanschluß (T₁, T₃, A₂) und dem Steuerdruckanschluß (X₂) mittels druckleitender Verbindungen verschaltet;
1.6 das Schieberventil (6) umfaßt einen Schieber (7), der mittels des Stellantriebes (8) verschiebbar im Schieberventil (6) gelagert ist und Steuerkanten aufweist, die den Querschnitt der druckteitenden Verbindungen zwischen den Anschlüssen (P, T₁, T₃, A₂, X₂) des Schieberventils (6) bestimmen, so daß ein entsprechendes Druckniveau in den Anschlüssen (P, T₁, T₃, A₂, X₂) in Abhängigkeit des Druckes am Speisungsanschluß (P) und der Stellung des Schiebers (7) eingestellt wird;
1.7 der Arbeitsraum (AR) der Kolbeneinheit (2) ist mittels einer druckleitender Verbindung (a₃, a₂) am Druckanschluß (A₂) des Schieberventils (6) angeschlossen;
1.8 der Arbeitsraum (AR) und der Federraum (FR) der Kolbeneinheit (2) sind mittels einer Schnellentladungsverbindung (a₃, a₁, t₂) verschaltet;
1.9 in die Schnellentladungsverbindung (a₃, a₁, t₂) ist das Schaltventil (5) geschaltet, das derart mit dem Steuerdruckanschluß (X₂) verbunden und mit dem Steuerdruck beaufschlagt ist, daß es bei einem Steuerdruck größer oder gleich einem vorgegebenen ersten Niveau schließt und bei einem Steuerdruck unter einem vorgegebenen zweiten Niveau öffnet, wobei das zweite Niveau gleich dem ersten Niveau oder kleiner als das erste Niveau ist.

2. Elektrohydraulischer Stellantrieb nach Anspruch 1, **gekennzeichnet durch** die weiteren folgenden Merkmale:
2.1 der Schnellentladungsverbindung (a₃, a₁, t₂) ist eine zweite druckleitenden Verbindung (a₃, a₂, t₃, t₁) zwischen Arbeitsraum (AR) und Federraum (FR) parallel geschaltet;
2.2 in die zweite druckleitenden Verbindung (a₃, a₂, t₃, t₁) ist das Schieberventil (6) mittels mindestens zweier Druckanschlüsse (A₂, T₃) derart geschaltet, daß die Steuerkanten des Schiebers (7) den Querschnitt der zweiten druckleitenden Verbindung (a₃, a₂, t₃, t₁) bestimmen.

3. Elektrohydraulischer Stellantrieb nach einem der Ansprüche 1 oder 2, **gekennzeichnet durch** die weiteren folgenden Merkmale:
3.1 der elektrohydraulische Stellantrieb umfaßt einen Positionssensor (4) zur Ermittlung der Kolbenposition;
3.2 der elektrohydraulische Stellantrieb umfaßt eine Regeleinrichtung (9), an die der Positionssensor (4) und der Schieberstellantrieb (8) angeschlossen ist;
3.3 der elektrohydraulische Stellantrieb ist frei von weiteren Positionssensoren.

4. Elektrohydraulischer Stellantrieb nach einem der Ansprüche 1 bis 3, **gekennzeichnet durch** die folgenden Merkmale:
4.1 der Schieberstellantrieb (8) umfaßt einen Elektromagneten, zum Aufbringen einer magnetischen Kraft in Abhängigkeit von elektrischen Signalen der Regeleinrichtung (9) auf den Schieber (7) des Schieberventils (6);
4.2 der Schieber (7) ist entgegengesetzt der elektromagnetischen Kraft durch ein druckelastisches Element, insbesondere eine Druckfeder (11), belastet;
4.3 der elektrohydraulische Stellantrieb ist frei von weiteren elektrischen Betätigungsmagneten.

5. Elektrohydraulischer Stellantrieb nach einem der Ansprüche 1 bis 4, **dadurch gekennzeichnet, daß** das den Kolben belastende druckelastische Element eine Druckfeder (3) umfaßt.

6. Elektrohydraulischer Stellantrieb nach einem der Ansprüche 1 bis 5, **dadurch gekennzeichnet, daß** der Steuerdruckanschluß (X₂) in druckleitender Verbindung mit einem Anschluß (X) steht, zum Anschluß eines externen Ventiles zum Erzeugen eines Druckabfalles.

7. Elektrohydraulischer Stellantrieb nach einem der Ansprüche 1 bis 6, **dadurch gekennzeichnet, daß** die Regeleinrichtung (9) einen Positionsregelkreis (9.1), einen Regler (9.2) und eine intelligente Logik (9.3) umfaßt.

8. Elektrohydraulischer Stellantrieb nach einem der Ansprüche 1 bis 7, **dadurch gekennzeichnet, daß** der Positionssensor (4) eine ortsfeste Wegemeßeinrichtung (4.1) in dem Gehäuse des Stellantriebes und einen am Kolben (12) befestigten Sensorring (4.2) umfaßt.

9. Elektrohydraulischer Stellantrieb nach einem der Ansprüche 1 bis 8, **dadurch gekennzeichnet, daß** das Schaltventil (5) als Plattenventil ausgebildet ist, dessen Ventilplatte (5.1) in Öffnungsrichtung mit dem hydrostatischen Druck des Arbeitsraumes (AR) und in Schließrichtung mit dem Steuerdruck beaufschlagt ist.

10. Elektrohydraulischer Stellantrieb nach einem der Ansprüche 1 bis 9, **dadurch gekennzeichnet, daß** die Funktionseinheit eine einzige mechanisch bewegliche Durchdringung der Außenwand aufweist, nämlich den Durchtritt der Kolbenstange (1).

11. Elektrohydraulischer Stellantrieb nach einem der Ansprüche 1 bis 10, **dadurch gekennzeichnet, daß** alle druckbeaufschlagten Teile frei von Schweißverbindungen sind.

12. Elektrohydraulischer Stellantrieb nach einem der Ansprüche 1 bis 11, **dadurch gekennzeichnet, daß** die Funktionseinheit einen im wesentlichen zylinderförmigen Grundkörper (13) aufweist, der die Kolbeneinheit (2) und das Schaltventil (5) aufnimmt, wobei an dem Grundkörper (13) seitlich das Schieberventil (6) und der Schieberstellantrieb (8) angeordnet sind.

13. Elektrohydraulischer Stellantrieb nach Anspruch 12, **dadurch gekennzeichnet, daß** der im wesentlichen zylinderförmige Grundkörper (13) mindestens über einen Teilbereich seiner Längsachse doppelwandig ausgeführt ist, wobei zwischen der äußeren Wand (13.1) und der inneren Wand (13.2) mindestens ein Teilabschnitt der Schnellentladungsverbindung ausgebildet ist, insbesondere der Abschnitt zwischen dem Anschluß an den Federraum (FR) und dem Schaltventil (5).

14. Verfahren zum Steuern eines elektrohydraulischen Stellantriebes, der als eine einzige Baueinheit ausbildende Funktionseinheit mit den Merkmalen gemäß einem der Ansprüche 1 bis 13 ausgebildet ist, **gekennzeichnet durch** die folgenden Verfahrensschritte:
14.1 der Schieberstellantrieb (9) verschiebt in Abhängigkeit eines Positionssollwertes (w) den Schieber (7) des Schieberventils (6);
14.2 der Schieber (7) des Schieberventils (6) bewirkt **durch** seine Positionsänderung eine Veränderung des Ölstromes vom Speisungsanschluß (P) über den Druckanschluß (A₂) zum Arbeitsraum (AR) der Kolbeneinheit (2) und damit zusammen mit dem den Kolben (12) belastenden druckelastischen Element eine geregelte Positionsveränderung des Kolbens (12);
14.3 der Schieber (7) des Schieberventils (6) bewirkt **durch** seine Positionsänderung eine Veränderung des Steuerdruckes am Steuerdruckanschluß (X₂);
14.4 das Schaltventil (5) öffnet oder schließt in Abhängigkeit des Steuerdruckes am Steuerdruckanschluß (X₂) die Schnellentladungsverbindung (a₃, a₁, t₂) zwischen Arbeitsraum (AR) und Federraum (FR) der Kolbeneinheit (2), wobei es bei einem oder oberhalb eines vorgegebenen ersten Niveaus schließt und unterhalb eines vorgegebenen zweiten Niveaus, das gleich oder kleiner als das erste Niveau ist, öffnet, so daß bei geschlossenem Schaltventil (5) die Positionsänderung des Kolbens (12) allein geregelt **durch** die Positionsänderung des Schiebers (7) erfolgt und bei geöffnetem Schaltventil (5) eine beschleunigte Bewegung des Kolbens (12) in Schließrichtung erfolgt.

15. Verfahren gemäß Anspruch 14, **dadurch gekennzeichnet, daß** die Positionsänderung des Schiebers (7) eine Veränderung des Ölstromes vom Speisungsanschluß (P) über den Druckanschluß (A₂) zum Arbeitsraum (AR) der Kolbeneinheit (2) oder vom Arbeitsraum (AR) über die zweite druckleitende Verbindung (a₃, a₂, t₃, t₁), den Druckanschluß (A₂) und den Druckanschluß (T₃) zum Federraum (FR) bewirkt und damit zusammen mit dem den Kolben (12) belastenden druckelastischen Element eine geregelte Positionsveränderung des Kolbens (12).

16. Verfahren gemäß einem der Ansprüche 14 bis 15, **dadurch gekennzeichnet, daß** der Positionssollwert (w) im Positionsregelkreis (9.1) der Regelelektronik (9) mit der vom Positionssensor (4) gemessenen Ist-Position (x) des Kolbens (12) verglichen wird und mit dem Regler (9.2) eine Veränderung der Kraft des Elektromagneten des Schieberstellantriebs (8) bewirkt wird, so daß der Schieber (7) des Schieberventiles (6) verschoben wird.

17. Verfahren gemäß Anspruch 16, **dadurch gekennzeichnet, daß** die intelligente Logik (9.3) die Geschwindigkeit der Bewegung des Kolbens (12) in Schließrichtung mittels der gemessenen Ist-Positionen (x) berechnet, mit einem vorgegebenen Sollwert vergleicht und die Magnetkraft des Elektromagneten begrenzt, wenn die berechnete Schließgeschwindigkeit kleiner als die vorgegebene Schließgeschwindigkeit ist.

18. Verfahren nach Anspruch 17, **dadurch gekennzeichnet, daß** der Schieber (7) des Schieberventiles (6) bei durch die intelligente Logik (9.3) begrenzter Magnetkraft des Elektromagneten in seine Schaltposition geschoben wird und **dadurch** das geschlossene Schaltventil (5) durch Veränderung des Steuerdruckes am Steuerdruckanschluß (X₂) geöffnet wird.

19. Verfahren gemäß einem der Ansprüche 14 bis 18, **dadurch gekennzeichnet, daß** durch Öffnen des Anschlusses (X), insbesondere mittels eines externen Ventiles, das Schaltventil (5) geöffnet wird und **dadurch** der Kolben (12) mit maximaler Geschwindigkeit in Schließrichtung bewegt wird.

## Claims

1. An electrohydraulic actuator, especially for the adjustment of a control valve of steam turbines;
1.1 with a functional unit forming a single component, comprising a piston unit (2), a switch-over valve (5), slide valve (6) and a slide actuator (8);
1.2 with the piston unit (2) comprising at least one piston (12) displaceable in the piston unit (2) which subdivides the space in the piston unit (2) into a working chamber (AR) and a spring chamber (FR), and a piston rod (1) connected to the piston (12);
1.3 with the piston (12) being loaded in one direction, which is the closing direction, by a pressure-elastic element in the spring chamber (FR), and in the opposite direction, which is the opening direction, by a hydrostatic pressure in the working chamber (AR);
1.4 with the slide valve (6) comprising at least one feed connection (P) for supplying a pressure-bearing medium, at least one pressure connection (T₁, T₃, A₂) for discharging and/or diverting the pressure-bearing medium, and a control pressure connection (X₂) for a control pressure;
1.5 with the feed connection (P) being switched together with the pressure connection (T₁, T₃, A₂) and the control pressure connection (X₂) by means of pressure-conductive connections;
1.6 with the slide valve (6) comprising a slide (7) which is displaceably held in the slide valve (6) by means of the actuator (8) and comprises control edges which determine the cross section of the pressure-conductive connections between the connections (P, T₁, T₃, A₂, X₂) of the slide valve (6), so that a respective pressure level is set in the connections (P, T₁, T₃, A₂, X₂) depending on the pressure in the feed connection (P) and the position of the slide (7);
1.7 with the working chamber (AR) of the piston unit (2) being connected by means of a pressure-conductive connection (a₃, a₂) to the pressure connection (A₂) of the slide valve (6);
1.8 with the working chamber (AR) and the spring chamber (FR) of the piston unit (2) being switched together by means of a rapid-discharge connection (a₃, a₁, t₂);
1.9 with the switch-over valve (5) being switched into the rapid-discharge connection (a₃, a₁, t₂), which switch-over valve is connected with the control pressure connection (X₂) and is subjected to the control pressure in such a way that it closes at a control pressure of greater than or equal to a predetermined first level and opens at a control pressure beneath a predetermined second level, with the second level being equal to the first level or lower than the first level.

2. An electrohydraulic actuator according to claim 1, **characterized by** the following features:
2.1 a second pressure-conductive connection (a₃, a₂, t₃, t₁) is switched in parallel with the rapid-discharge connection (a₃, a₁, t₂) between working chamber (AR) and spring chamber (FR);
2.2 the slide valve (6) is switched into the second pressure-conductive connection (a₃, a₂, t₃, t₁) by means of at least two pressure connections (A₂, T₃) in such a way that the control edges of the slide (7) determine the cross section of the second pressure-conductive connection (a₃, a₂, t₃, t₁).

3. An electrohydraulic actuator according to one of the claims 1 or 2, **characterized by** the following further measures:
3.1 the electrohydraulic actuator comprises a position sensor (4) for determining the piston position;
3.2 the electrohydraulic actuator comprises a control device (9) to which the position sensor (4) and the slide actuator (8) are connected;
3.3 the electrohydraulic actuator is free from any further position sensors.

4. An electrohydraulic actuator according to one of the claims 1 to 3, **characterized by** the following features:
4.1 the slide actuator (8) comprises an electromagnet for applying a magnetic force on the slide (7) of the slide valve (6) depending on electric signals of the control device (9);
4.2 the slide (7) is loaded in the opposite direction of the electromagnetic force by a pressure-elastic element, especially a pressure spring (11);
4.3 the electrohydraulic actuator is free from any further electric actuating magnets.

5. An electrohydraulic actuator according to one of the claims 1 to 4, **characterized in that** the pressure-elastic element pressurizing the piston comprises a pressure spring (3).

6. An electrohydraulic actuator according to one of the claims 1 to 5, **characterized in that** the control pressure connection (X₂) is in a pressure-conductive connection with a connection (X) for the connection of an external valve for producing a pressure drop.

7. An electrohydraulic actuator according to one of the claims 1 to 6, **characterized in that** the control device (9) comprises a position control circuit (9.1), a controller (9.2) and an intelligent logic circuit (9.3).

8. An electrohydraulic actuator according to one of the claims 1 to 7, **characterized in that** the position sensor (4) comprises a stationary displacement measuring device (4.1) in the housing of the actuator and a sensor ring (4.2) fastened to the piston (12).

9. An electrohydraulic actuator according to one of the claims 1 to 8, **characterized in that** the switch-over valve (5) is arranged as a plate valve whose valve plate (5.1) is subjected in the opening direction with the hydrostatic pressure of the working chamber (AR) and in the closing direction with the control pressure.

10. An electrohydraulic actuator according to one of the claims 1 to 9, **characterized in that** the functional unit comprises a single mechanically movable penetration of the outside wall, namely the passage of the piston rod (1).

11. An electrohydraulic actuator according to one of the claims 1 to 10, **characterized in that** all pressurized parts are free from welded connections.

12. An electrohydraulic actuator according to one of the claims 1 to 11, **characterized in that** the functional unit comprises a substantially cylindrical basic body (13) which receives the piston unit (2) and the switch-over valve (5), with the slide valve (6) and the slide actuator (8) being arranged laterally on the basic body (13).

13. An electrohydraulic actuator according to claim 12, **characterized in that** the substantially cylindrical basic body (13) is provided with a double wall configuration over at least a partial region of its longitudinal axis, with at least one partial section of the rapid discharge connection being formed between the outer wall (13.1) and the inner wall (13.2).

14. A method for controlling an electrohydraulic actuator which is configured as a functional unit forming a single component, comprising the features according to one of the claims 1 to 13, **characterized by** the following method steps:
14.1 the slide actuator (9) displaces the slide (7) of the slide valve (6) depending on a setpoint position value (w);
14.2 the slide (7) of the slide valve (6) produces by its change of position a change of the oil flow from the feed connection (P) via the pressure connection (A₂) to the working chamber (AR) of the piston unit (2) and thus a controlled change in position of the piston (12) in combination with the pressure-elastic element loading the piston (12);
14.3 the slide (7) of the slide valve (6) produces by its change of position a change of the control pressure in the control pressure connection (X₂);
14.4 the switch-over valve (5) opens or closes depending on the control pressure on the control pressure connection (X₂) the rapid discharge connection (a₃, a₁, t₂) between the working chamber (AR) and the spring chamber (FR) of the piston unit (2), with the same closing at a predetermined first level or above a predetermined first level and opening below a predetermined second level which is equal to or smaller than the first level, so that when the switch-over valve (5) is closed the change in position of the piston (12) occurs in a manner only controlled by the change of position of the slide (7) and an accelerated movement of the piston (12) in the closing direction occurs when the switch-over valve (5) is opened.

15. A method according to claim 14, **characterized in that** the change of position of the slide (7) causes a change of the oil flow from the feed connection (P) via the pressure connection (A₂) to the working chamber (AR) of the piston unit (2) or from the working chamber (AR) via the second pressure-conductive connection (a₃, a₂, t₃, t₁), the pressure connection (A₂) and the pressure connection (T₃) to the spring chamber (FR), and thus a controlled change in position of the piston (12) in combination with the pressure-elastic element loading the piston (12).

16. A method according to one of the claims 14 to 15, **characterized in that** the setpoint position value (w) is compared in the position control circuit (9.1) of the control electronic circuit (9) with the actual position (x) of the piston (12) as measured by the position sensor (4), and that a change of the force of the electromagnet of the slide actuator (8) is produced with the controller (9.2), so that the slide (7) of the slide valve (6) is displaced.

17. A method according to claim 16, **characterized in that** the intelligent logic circuit (9.3) calculates the speed of the movement of the piston (12) in the closing direction by means of the measured actual positions (x), compares the same with a predetermined setpoint value and limits the magnetic force of the electromagnet when the calculated closing speed is smaller than the predetermined closing speed.

18. A method according to claim 17, **characterized in that** the slide (7) of the slide valve (6) is pushed to its switching position at a magnetic force of the electromagnet which is limited by the intelligent logic circuit (9.3), and thereby the closed switch-over valve (5) is opened by a change of the control pressure on the control pressure connection (X₂).

19. A method according to one of the claims 14 to 18, **characterized in that** the switch-over valve (5) is opened by opening the connection (X), especially by means of an external valve, and thereby the piston (12) is moved with maximum speed in the closing direction.

## Revendications

1. Entraînement de réglage électro-hydraulique, en particulier pour le réglage d'une vanne de régulation de turbines à vapeur,
1.1 avec une unité fonctionnelle formant un seul ensemble, comprenant une unité de piston (2), une vanne de commutation (5), une vanne à tiroir (6) et un entraînement de réglage du tiroir (8) ;
1.2 l'unité de piston (2) comprend au moins un piston (12) coulissant dans l'unité de piston (2), qui partage l'espace intérieur de l'unité de piston (2) en un espace de travail (AR) et un espace d'amortissement (FR), et une tige de piston (1) reliée au piston (12) ;
1.3 le piston (12) est contraint dans une direction, la direction de fermeture, par un élément élastique en compression dans l'espace d'amortissement (FR) et dans la direction opposée, la direction d'ouverture, par une pression hydrostatique dans l'espace de travail (AR) ;
1.4 la vanne à tiroir (6) comprend un raccord d'alimentation (P) pour l'arrivée d'un fluide véhiculant une pression, au moins un raccord de pression (T₁, T₃, A₂) pour l'évacuation et/ou la dérivation du fluide véhiculant la pression, et un raccord de pression de commande (X₂) pour une pression de commande ;
1.5 le raccord d'alimentation (P) est relié en circuit avec le raccord de pression (T₁, T₃, A₂) et le raccord de pression de commande (X₂) au moyen de liaisons véhiculant la pression ;
1.6 la vanne à tiroir (6) comprend un tiroir (7) supporté au moyen de l'entraînement de réglage du tiroir (8) de manière coulissante dans la vanne à tiroir (6) et qui présente des bords de guidage qui déterminent la section des liaisons acheminant la pression entre les raccords (P, T₁, T₃, A₂, X₂) de la vanne à tiroir (6), de sorte qu'un niveau de pression correspondant se crée dans les raccords (P, T₁, T₃, A₂, X₂) en fonction de la pression dans le raccord d'alimentation (P) et de la position du tiroir (7) ;
1.7 l'espace de travail (AR) de l'unité de piston (2) est raccordé au raccord de pression (A₂) de la vanne à tiroir (6) au moyen d'une liaison véhiculant la pression (a₃, a₂) ;
1.8 l'espace de travail (AR) et l'espace d'amortissement (FR) de l'unité de piston (2) sont montés en circuit au moyen d'une liaison de déchargement rapide (a₃, a₁, t₂) ;
1.9 la vanne de commutation (5) est montée dans la liaison de déchargement rapide (a₃, a₁, t₂) et communique avec le raccord de pression de commande (X₂) en recevant la pression de commande de telle manière qu'elle se ferme lorsque la pression de commande est supérieure ou égale à un premier niveau prédéterminé et s'ouvre lorsque la pression de commande est inférieure à un second niveau prédéterminé, le second niveau étant égal ou inférieur au premier niveau.

2. Entraînement de réglage électro-hydraulique selon la revendication 1, **caractérisé en outre en ce que** :
2.1 une seconde liaison acheminant la pression (a₃, a₂, t₃, t₁) est montée en parallèle à la liaison de déchargement rapide (a₃, a₁, t₂) entre l'espace de travail (AR) et l'espace d'amortissement (FR) ;
2.2 la vanne à tiroir (6) est montée dans la seconde liaison acheminant la pression (a₃, a₂, t₃, t₁) au moyen d'au moins deux raccords de pression (A₂, T₃), de telle manière que les bords de guidage du tiroir (7) déterminent la section de la seconde liaison acheminant la pression (a₃, a₂, t₃, t₁).

3. Entraînement de réglage électro-hydraulique selon la revendication 1 ou 2, **caractérisé en outre en ce que** :
3.1 l'entraînement de réglage électro-hydraulique comprend un capteur de position (4) destiné à déterminer la position du piston ;
3.2 l'entraînement de réglage électro-hydraulique comprend un dispositif de régulation (9) auquel le capteur de position (4) et l'entraînement de réglage du tiroir (8) sont raccordés ;
3.3 l'entraînement de réglage électro-hydraulique ne possède pas d'autres capteurs de position.

4. Entraînement de réglage électro-hydraulique selon l'une quelconque des revendications 1 à 3, **caractérisé en ce que** :
4.1 l'entraînement de réglage du tiroir (8) comprend un électroaimant destiné à exercer une force magnétique sur le tiroir (7) de la vanne à tiroir (6) en fonction de signaux électriques du dispositif de régulation (9) ;
4.2 le tiroir (7) est contraint en sens inverse de la force électromagnétique par un élément élastique en compression, en particulier un ressort de compression (11) ;
4.3 l'entraînement de réglage électro-hydraulique ne possède pas d'autres électroaimants d'actionnement.

5. Entraînement de réglage électro-hydraulique selon l'une quelconque des revendications 1 à 4, **caractérisé en ce que** l'élément élastique en compression contraignant le piston comprend un ressort de compression (3).

6. Entraînement de réglage électro-hydraulique selon l'une quelconque des revendications 1 à 5, **caractérisé en ce que** le raccord de pression de commande (X₂) communique de façon à véhiculer la pression avec un raccord (X) pour le raccordement d'une vanne externe destinée à produire une baisse de pression.

7. Entraînement de réglage électro-hydraulique selon l'une quelconque des revendications 1 à 6, **caractérisé en ce que** le dispositif de régulation (9) comprend un circuit de réglage de la position (9.1), un régulateur (9.2) et un circuit logique intelligent (9.3).

8. Entraînement de réglage électro-hydraulique selon l'une quelconque des revendications 1 à 7, **caractérisé en ce que** le capteur de position (4) comprend un dispositif stationnaire de mesure de la distance (4.1) dans le boîtier de l'entraînement de réglage et une bague de capteur (4.2) fixée au piston (12).

9. Entraînement de réglage électro-hydraulique selon l'une quelconque des revendications 1 à 8, **caractérisé en ce que** la vanne de commutation (5) est conçue comme une vanne à plaque dont la plaque de vanne (5.1) est soumise dans le sens de l'ouverture à la pression hydrostatique de l'espace de travail (AR) et dans le sens de fermeture à la pression de commande.

10. Entraînement de réglage électro-hydraulique selon l'une quelconque des revendications 1 à 9, **caractérisé en ce que** l'unité fonctionnelle possède une seule traversée de la paroi mécaniquement mobile, à savoir la traversée de la tige de piston (1).

11. Entraînement de réglage électro-hydraulique selon l'une quelconque des revendications 1 à 10, **caractérisé en ce que** toutes les parties soumises à une pression sont dépourvues de soudures.

12. Entraînement de réglage électro-hydraulique selon l'une quelconque des revendications 1 à 11, **caractérisé en ce que** l'unité fonctionnelle possède un corps (13) sensiblement cylindrique qui reçoit l'unité de piston (2) et la vanne de commutation (5), la vanne à tiroir (6) et l'entraînement de réglage du tiroir (8) étant disposés sur le côté du corps (13).

13. Entraînement de réglage électro-hydraulique selon la revendication 12, **caractérisé en ce que** le corps (13) sensiblement cylindrique est à double paroi sur au moins une partie de son axe longitudinal, une partie de la liaison de déchargement rapide étant formée entre la paroi extérieure (13.1) et la paroi intérieure (13.2), en particulier la partie comprise entre le raccordement à l'espace d'amortissement (FR) et la vanne de commutation (5).

14. Procédé pour la commande d'un entraînement de réglage électro-hydraulique conformé comme une unité fonctionnelle formant un seul ensemble et présentant les caractéristiques de l'une quelconque des revendications 1 à 13, **caractérisé par** les étapes suivantes :
14.1 l'entraînement de réglage du tiroir (9) déplace le tiroir (7) de la vanne à tiroir (6) en fonction d'une consigne de position (w) ;
14.2 le tiroir (7) de la vanne à tiroir (6) provoque en changeant de position un changement du débit d'huile entre le raccord d'alimentation (P) et l'espace de travail (AR) de l'unité de piston (2) via le raccord de pression (A₂) et de ce fait, avec l'élément élastique en compression qui contraint le piston (12), un changement contrôlé de la position du piston (12) ;
14.3 le tiroir (7) de la vanne à tiroir (6) provoque en changeant de position un changement de la pression de commande au niveau du raccord de pression de commande (X₂) ;
14.4 la vanne de commutation (5) ouvre ou ferme, en fonction de la pression de commande au niveau du raccord de pression de commande (X₂), la liaison de déchargement rapide (a₃, a₁, t₂) entre l'espace de travail (AR) et l'espace d'amortissement (FR) de l'unité de piston (2), en fermant à un premier niveau prédéterminé ou au-dessus et en ouvrant en-dessous d'un second niveau prédéterminé, qui est égal ou inférieur au premier niveau, de sorte que lorsque la vanne de commutation (5) est fermée, le changement de position du piston (12) est contrôlé uniquement par le changement de position de la vanne (7) et lorsque la vanne de commutation (5) est ouverte, le déplacement du piston (12) vers la position de fermeture est accéléré.

15. Procédé selon la revendication 14, **caractérisé en ce que** le changement de position du tiroir (7) entraîne une modification du débit d'huile entre le raccord d'alimentation (P) et l'espace de travail (AR) de l'unité de piston (2) via le raccord de pression (A₂) ou entre l'espace de travail (AR) et l'espace d'amortissement (FR) via la seconde liaison véhiculant la pression (a₃, a₂, t₂, t₁), le raccord de pression (A₂) et le raccord de pression (T₃) et ainsi, avec l'élément élastique en compression contraignant le piston (12), un changement de pression contrôlé du piston (12).

16. Procédé selon l'une quelconque des revendications 14 et 15, **caractérisé en ce que** la consigne de position (w) est comparée dans le circuit de régulation de la position (9.1) de l'électronique de régulation (9) avec la position réelle (x) du piston (12) mesurée par le capteur de position (4) et le régulateur (9.2) réalise une modification de la force de l'électroaimant de l'entraînement de réglage du tiroir (8) de façon à déplacer le tiroir (7) de la vanne à tiroir (6).

17. Procédé selon la revendication 16, **caractérisé en ce que** le circuit logique intelligent (9.3) calcule la vitesse de déplacement du piston (12) dans le sens de la fermeture au moyen des positions réelles (x) mesurées, la compare avec une consigne prédéterminée et limite la force magnétique de l'électroaimant lorsque la vitesse de fermeture calculée est inférieure à la vitesse de fermeture de consigne.

18. Procédé selon la revendication 17, **caractérisé en ce que** lorsque le circuit logique intelligent (9.3) limite la force magnétique de l'électroaimant, le tiroir (7) de la vanne à tiroir (6) est déplacé dans sa position de commutation et la vanne de commutation (5) fermée est ainsi ouverte par la modification de la pression de commande au niveau du raccord de pression de commande (X₂).

19. Procédé selon l'une quelconque des revendications 14 à 18, **caractérisé en ce que** l'ouverture du raccord (X), en particulier au moyen d'une vanne externe, entraîne l'ouverture de la vanne de commutation (5) et ainsi le déplacement du piston (12) à la vitesse maximale dans le sens de la fermeture.
